# EUROPEAN PATENT APPLICATION

(11) **EP 4 336 380 A2**
(43) Date of publication of application: **13.03.2024**
(21) Application number: 23195679.8
(22) Date of filing: 06.09.2023
(51) Int. Cl.: G06F 16/435

(54) **A USER-CENTRIC RANKING ALGORITHM FOR RECOMMENDING CONTENT ITEMS**

(30) Priority: 09.09.2022 US 202263405234 P; 28.11.2022 US 202218059323
(71) Applicant: Meta Platforms Technologies, LLC, Menlo Park, CA 94025 (US)
(72) Inventor: YANG, Shuanghong, Menlo Park (US)
(74) Representative: Murgitroyd & Company

(57) **Abstract**

A method for requesting a recommendation for content items in a recommender system is provided. The method includes extracting a user attribute from the recommender system, identifying multiple content items that match a user preference based on the user attribute, determining an interest value for the user on each content item based on an affinity between the user attribute and a content item attribute, and providing the user a list of content items ranked according to the interest value for the user. A system including a memory storing instructions and a processor configured to execute the instructions and cause the system to perform the above method is also provided.

## Description

### CROSS-REFERENCE TO RELATED APPLICATIONS

The present disclosure is related and claims priority under 35 §119(e) to US Prov. Appln. No. 63/405,234, entitled USER CENTRIC MODELS FOR RANKING, to Shuanghong YANG, filed on Sep. 9, 2022, the contents of which are herein incorporated by reference in their entirety, for all purposes.

### BACKGROUND

### Field

The present disclosure is related to machine learning algorithms for ranking content items in recommender systems based on user-centric models. More specifically, the present disclosure is related to ranking content items to improve recommender system applications.

### Related Art

Machine learning models in recommender systems tend to focus on learning inherent features for the candidate content items instead of building representations for the target users that recommendations are made for. This approach becomes more of a problem as the inventory of the content grows dramatically over time as new content items are added to the inventory, making the algorithm increasingly less accurate.

### SUMMARY

In a first embodiment, a computer-implemented method includes receiving a request for recommending content items from a user of a recommender system, and extracting a user attribute from the system. The computer-implemented method further includes identifying multiple content items that match the user preference, determining an interest value for the user on each content item based on the user attribute, the item attribute and the affinities between the two, and providing the user a list of content items ranked according to the interest value for the user.

In some embodiments, determining an interest value for the user on each content item comprises aggregating multiple user attributes from multiple users in the recommender system based on an engagement interaction for each user with an item.

In some embodiments, determining an interest value for the user on each content item comprises identifying a time when the user posted the request.

In some embodiments, determining an interest value for the user on each content item comprises identifying a time when the content item was posted in the recommender system.

In some embodiments, the computer-implemented method further comprises providing a selected content item from the list of content items to the user, upon receipt of a user selection from the list of content items.

In some embodiments, the method further comprises updating the interest value for the user upon receipt of a user selection from the list of content items.

In a second embodiment, a system includes a memory storing multiple instructions, and one or more processors configured to execute the instructions to cause the system to perform operations. The operations include to receive a request for recommending content items from a user of a recommender system, to extract a user attribute from the system, to identify multiple content items that match the user interest preference, to determine an interest value for the user on each content item based on the user attribute, the item attribute and the affinities between the two, and to provide the user a list of content items ranked according to the interest value for the user.

In the second embodiment, the one or more processors, may be configured to execute the instructions to cause the system to perform operations corresponding to steps of the computer implemented method according to embodiments herein described.

In some embodiments, to determine an interest value for the user on each content item the one or more processors execute instructions to aggregate multiple user attributes from multiple users in the recommender system based on an engagement interaction for each user with an item.

In some embodiments, to determine an interest value for the user on each content item the one or more processors execute instructions to identify a time when the user posted the request.

In some embodiments, to determine an interest value for the user on each content item the one or more processors execute instructions to identify a time when the content item was posted in the recommender system.

In some embodiments, the one or more processors further execute instructions to provide a selected content item from the list of content items to the user, upon receipt of a user selection from the list of content items.

In some embodiments, the one or more processors further execute instructions to update the interest value for the user upon receipt of a user selection from the list of content items.

In a third embodiment, a computer-implemented method includes extracting a user attribute from each of multiple users in a recommender system. For each user, the computer-implemented method also includes collecting an engagement information with multiple content items. The computer-implemented method also includes aggregating the engagement information over the content items to form a statistical value, and generating a table that associates the user attribute with each of the content items based on the statistical value. The third embodiment may for example apply features of the computer-implemented method hereinabove described to each of multiple users in a recommender system.

In some embodiments, the computer-implemented method further comprises converting the user attribute into a numerical value representative of a coordinate of a first point, representative of each of the users in a multidimensional space, wherein each of the content items is associated with a target point in the multidimensional space, and forming a table comprises measuring a distance between the first point and each target point in the multidimensional space.

In some embodiments, extracting a user attribute comprises hashing the user attribute to generate a second user attribute.

In some embodiments, the computer-implemented method further comprises embedding each of the users into a multidimensional space by converting the user attribute into one or more numerical values indicative of one or more coordinates in the multidimensional space, and using a metric in the multidimensional space to determine the statistical value.

In some embodiments, aggregating the engagement information comprises determining a probability value that one of the users will engage with one of the content items based on a content item attribute.

In some embodiments, aggregating the engagement information over the content items comprises aggregating multiple user attributes for users engaged with a popular content item based on a population segment.

In some embodiments, forming the table that associates the user attribute with each of the content items comprises associating a time for a posting of each of the content items in the recommender system with the engagement information.

In some embodiments, forming the table that associates the user attribute with each of the content items comprises associating a time for a user search query in the recommender system with the engagement information.

In other embodiments, a non-transitory, computer-readable medium stores instructions which, when executed by a processor, cause a computer to perform a method. The method includes receiving a request for recommending content items from a user of a recommender system, extracting a user attribute from the system, identifying multiple content items that match the user interest preference, determining an interest value for the user on each content item based on the user attribute, the item attribute and the affinities between the two, and providing the user a list of content items ranked according to the interest value for the user.

In yet other embodiments, a system includes a first means for storing instructions and a second means for executing the instructions to cause the system to perform a method. The method includes receiving a request for recommending content items from a user of a recommender system, extracting a user attribute from the system, identifying multiple content items that match the user interest preference, determining an interest value for the user on each content item based on the user attribute, the item attribute and the affinities between the two, and providing the user a list of content items ranked according to the interest value for the user.

These and other embodiments will be clear to one of ordinary skill in the art, in view of the following.

### BRIEF DESCRIPTION OF THE DRAWINGS

FIG. 1 illustrates a network architecture for a media sharing service providing device verification using key transparency, according to some embodiments.
FIG. 2 is a block diagram illustrating an example server, client device, and a database from the architecture in FIG. 1, according to some embodiments.
FIGS. 3A-3B illustrate quality ranking models for use in media sharing network applications, according to some embodiments.
FIG. 4. illustrates a chart with model quality progression as a function of scale, according to some embodiments.
FIG. 5 is a flowchart illustrating steps in a method for searching a content item in response to a user preference in a recommender system, according to some embodiments.
FIG. 6 is a flow chart illustrating steps in a method for training a ranking function for content items in a recommender system based on user attributes, item attribute and the affinities between the two, according to some embodiments.
FIG. 7 is a block diagram illustrating an exemplary computer system with which servers and other client devices, and the method in FIGS. 5 and 6 can be implemented, according to some embodiments.

In the figures, elements having the same or similar reference numeral are associated with the same or similar attributes, unless explicitly mentioned otherwise.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

### General Overview

The past decade has witnessed large success achieved by ultra-scale models. In fact, classic artificial intelligence models to date are dominantly big models, including computer vision applications, *e.g.,* Vision Transformer (ViT), Github (GiT), masked auto-encoders (MAE), natural language processing, *e.g.,* bidirectional encoder representation from transformers (BERT), GUID partition table (GPT), pathways language model (PaLM), and multi-modality modeling, *e.g.,* DALL-E, contrastive captioners (Coca), contrastive language-image pre-training (CLIP), and the like. In the above cases, scaling improved the quality of the metrics in these models by orders of magnitude, for example, ViT models were able to reduce ImageNet error rate over ResNet by more than half. However, ranking models in recommender systems have not yet been scaled successfully to their full advantage as in the other domains mentioned above.

Embodiments as disclosed herein improve model quality for ranking algorithms in recommender systems. A desirable feature of embodiments as disclosed herein is that the model needs to have the capability to effectively utilize the data and compute to continuously improve its quality.

Current recommender systems provide an abundant amount of data, and advanced infrastructure. However, current ranking algorithms in these systems suffer from a quality saturation problem. Accordingly, training traditional models on larger datasets reduces, rather than increases, the quality of ranking algorithms.

To resolve the above technical problem, embodiments as disclosed herein use a "user-centric model," based on a transposed view of the interaction data in the recommender system. This formulation has a number of advantages, including a lack of quality saturation when trained on substantially larger data sets.

Some of the advantages of user-centric ranking includes a lower complexity. The vocabulary (*e.g.,* set of distinct ids for whom latent embedding vectors are to be learned) in item-centered formulation grows linearly over time, whereas for user-centered formulation, the vocabulary size is nearly constant. As a result, a user-centric ranking model have the ability to improve accuracy continuously over time as users keep on using the recommender.

Another advantage of user-centric ranking includes faster reaction to user feedback. In traditional models, relevance score for a specific content item remains relatively stable. Even in the case when a large number of users interact with the item in a short period of time, it may take a long time for that score to ramp up in the training process. However, the ability to detect burst behaviors and trendy contents/creators at the onset and maintain relatively liquid dynamics is highly desirable. A user-centric ranking approach can pick up relevant content items for a target user based on interactions from like-minded users even when the amount of interactions are still small. This allows improvement of new content warm-up, exploration efficiency, and old content retiring.

User-centric ranking also provides better content diversity. While traditional approach aims to identify content items that are similar to the ones that a user interacted with in the past, recommendation diversity tends to decay over time as a user's behavioral data accumulates, leading to a penalty effect for heavier users as the recommendations to them will become increasingly alike. In contrast, in user-centric ranking, any serendipity or randomness in one user's engagement behavior would propagate and in turn influence other users' recommendations.

User-centric ranking also results in better interest discovery and adaptation. Traditional algorithms can be easily trapped in self-reinforcing loopholes. Over time, there's less and less chance for the algorithm to identify its blind spots (*e.g.,* interests that are not yet covered) and correct them. In contrast, user-centric ranking can pick up and explore uncovered interest topics from behaviors of historically like-minded users.

One of the challenges for user-centric ranking is the cardinality of the user set (typically, several orders of magnitude greater than that of the items space). Accordingly, the training process has initially many more parameters when using user-centric schemes than for item-centric schemes. To limit the memory footprint, some embodiments include feature hashing, and limiting the dimensionality and precision of the embedding parameters. Some embodiments include tuning the user-centric ranking by adjusting the collision rate, dimensionality, and precision, to find the best tradeoff between memory usage and model quality.

### Example System Architecture

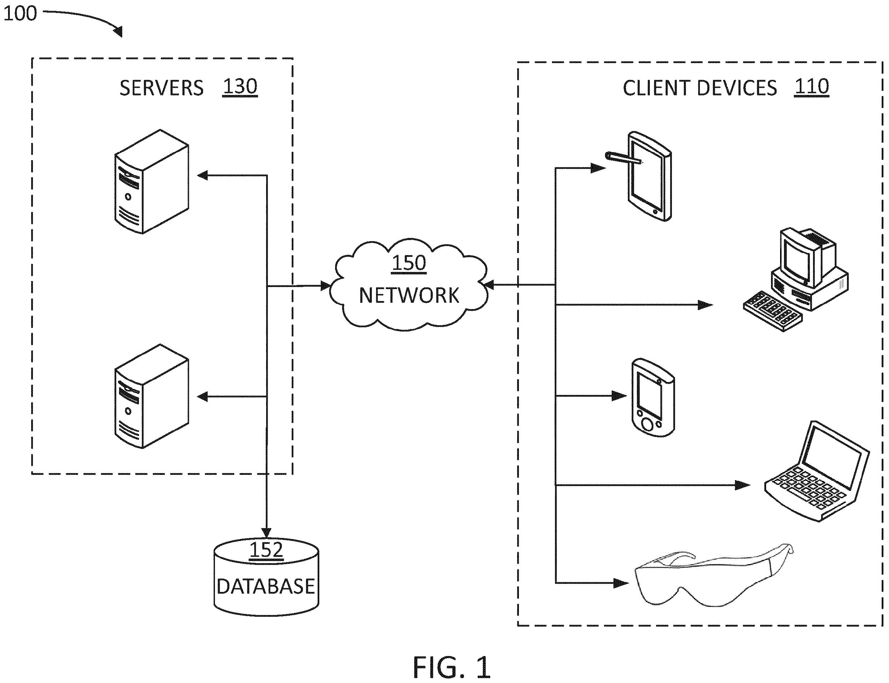

FIG. 1 illustrates a network architecture 100 for a recommender system, according to some embodiments. Servers 130 and a database 152 are communicatively coupled with client devices 110 via a network 150. Servers 130 may host a media sharing application running in client devices 110. Client devices 110 may be used by participants in the media sharing (*e.g.,* chats involving two or more participants). Client devices 110 may include smart phones, laptops, mobile devices, palm devices, and even desktops. In some embodiments, client devices 110 may include virtual reality or augmented reality (VR/AR) headsets and/or smart glasses, and the content shared may include images, videos, and immersive reality elements. Network 150 can include, for example, any one or more of a local area network (LAN), a wide area network (WAN), the Internet, and the like. Further, network 150 can include, but is not limited to, any one or more of the following network topologies, including a bus network, a star network, a ring network, a mesh network, a star-bus network, tree or hierarchical network, and the like. Database 152 may store media items such as pictures, images, videos, and VR/AR elements such as avatars, spark features, and the like.

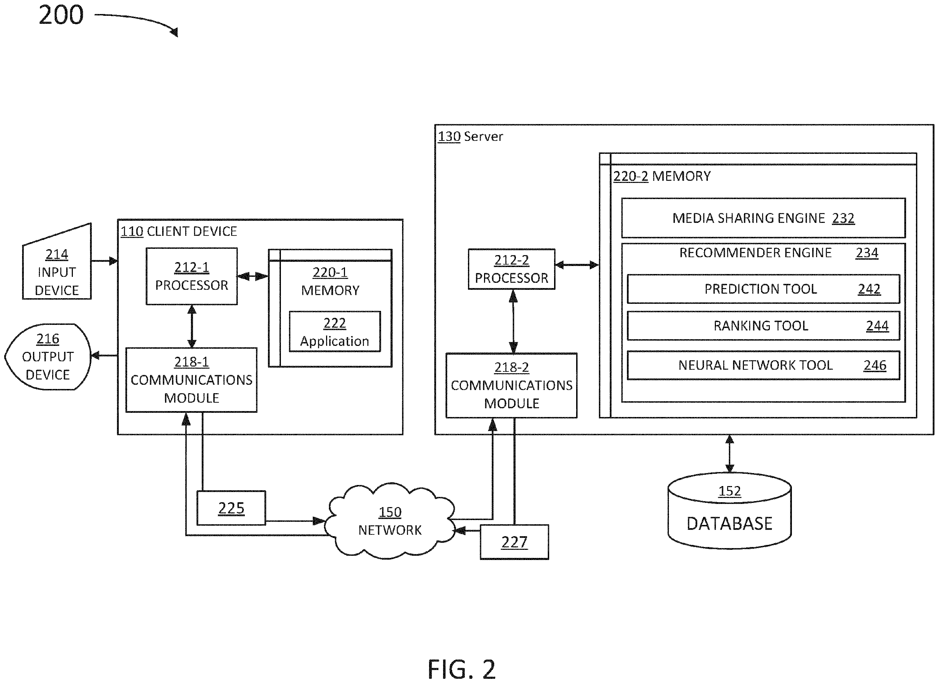

FIG. 2 is a block diagram 200 illustrating an example server 130, client device 110, and database 152 from architecture 100, according to some embodiments. Client device 110 and server 130 are communicatively coupled over network 150 via respective communications modules 218-1 and 218-2 (hereinafter, collectively referred to as "communications modules 218"). Communications modules 218 are configured to interface with network 150 to send and receive information, such as data, requests, responses, and commands to other devices via network 150. Communications modules 218 can be, for example, modems or Ethernet cards, and may include radio hardware and software for wireless communications (*e.g.,* via electromagnetic radiation, such as radiofrequency -RF-, near field communications -NFC-, Wi-Fi, and Bluetooth radio technology). A user may interact with client device 110 via an input device 214 and an output device 216. Input device 214 may include a mouse, a keyboard, a pointer, a touchscreen, a microphone, a joystick, a virtual joystick, and the like. In some embodiments, input device 214 may include cameras, microphones, and sensors, such as touch sensors, acoustic sensors, inertial motion units -IMUs- and other sensors configured to provide input data to a VR/AR headset. Output device 216 may be a screen display, a touchscreen, a speaker, and the like.

Client device 110 may include a memory 220-1 and a processor 212-1. Memory 220-1 may include a media sharing application 222, configured to run in client device 110 and couple with input device 214 and output device 216. Application 222 may be downloaded by the user from server 130 and may be hosted by server 130. Execution of application 222 may be controlled by processor 212-1. In some embodiments, client device 110 is a VR/AR headset and application 222 includes an immersive reality application (*e.g.,* an immersive media sharing application). In some embodiments, client device 110 is a mobile phone that can collect a video or image of a participant in a media sharing hosted by application 222.

A server 130 includes a memory 220-2, a processor 212-2, and communications module 218-2. Hereinafter, processors 212-1 and 212-2, and memories 220-1 and 220-2, will be collectively referred to, respectively, as "processors 212" and "memories 220." Processors 212 are configured to execute instructions stored in memories 220.

In some embodiments, memory 220-2 includes a media sharing engine 232 and a recommender engine 234. A participant in a media sharing may access media sharing engine 232 using client device 110, through application 222. Accordingly, client device 110 may provide a dataset 225 to server 130, and server 130 may provide a dataset 227 to client device 110. Dataset 225 may include a media file such as a video, image, or a VR/AR object from client device 110 (or a search query thereof). Media sharing engine 232 may share or provide media files such as images, video, music or sound files, and even VR/AR features such as avatars and other objects to application 222 via a dataset 227, upon receipt of the search query from client device 110. For example, dataset 227 may include a list of search results provided by recommender engine 234, ranked according to an order of relevance for the user of client device 110.

Recommender engine 234 includes a prediction tool 242, a ranking tool 244, and a neural network tool 246. Prediction tool 242 provides a numerical value associating a user of the media sharing social network, at a fist time (uₜ₁), with an item (*e.g.,* a network item or media file) at a second time (iₜ₂). The numerical value may be a probability that the user will "like" the item (*e.g.,* press a "like" button for the item in the social network), or download the item if listed in a search result presented to the user. In some embodiments, prediction tool 242 aggregates historical data for multiple users in the media sharing social network and performs a statistical analysis such as not only a probability but also a standard deviation and a confidence level for the numerical value. Ranking tool 244 provides a list of items or media files ordered according to the numerical value determined by prediction tool 242. Neural network tool 246 is trained to obtain the numeric value for prediction tool 242 based on historical data stored in database 152.

In some embodiments, neural network tool 246 may be part of one or more machine learning models stored in database 152. Database 152 includes training archives and other data files that may be used by prediction tool 242 to accurately predict a gaze direction of the transmitter avatar. Moreover, in some embodiments, at least one or more training archives or machine learning models may be stored in either one of memories 220, and client device 110 may have access to them through application 222.

Neural network tool 246 may include algorithms trained for the specific purposes of the engines and tools included therein. The algorithms may include machine learning or artificial intelligence algorithms making use of any linear or non-linear algorithm, such as a neural network algorithm, or multivariate regression algorithm. In some embodiments, the machine learning model may include a neural network (NN), a convolutional neural network (CNN), a generative adversarial neural network (GAN), a deep reinforcement learning (DRL) algorithm, a deep recurrent neural network (DRNN), a classic machine learning algorithm such as random forest, k-nearest neighbor (KNN) algorithm, k-means clustering algorithms, or any combination thereof. More generally, the machine learning model may include any machine learning model involving a training step and an optimization step. In some embodiments, training database 152 may include a training archive to modify coefficients according to a desired outcome of the machine learning model.

In some embodiments, media sharing engine 232 and recommender engine 234 or the tools contained therein and at least part of database 152 may be hosted in a different server that is accessible by server 130 or client device 110.

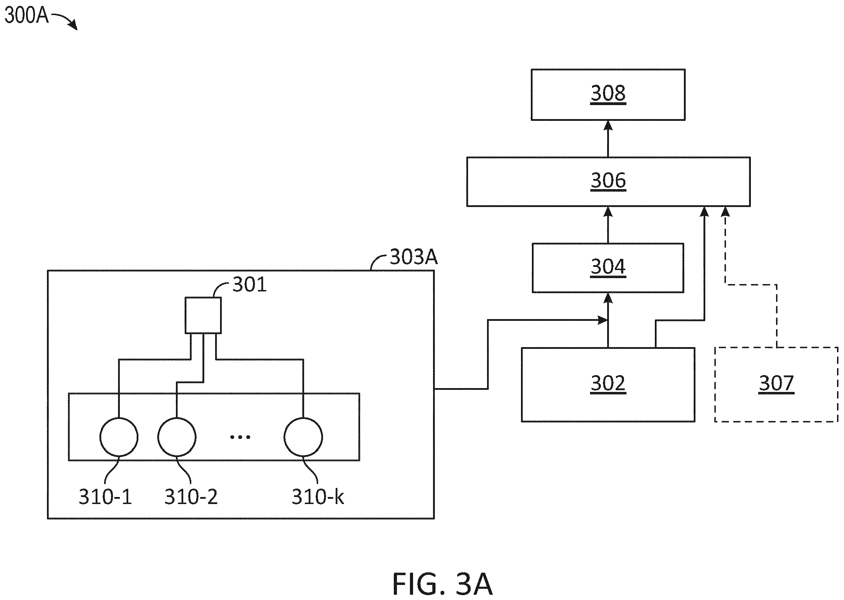

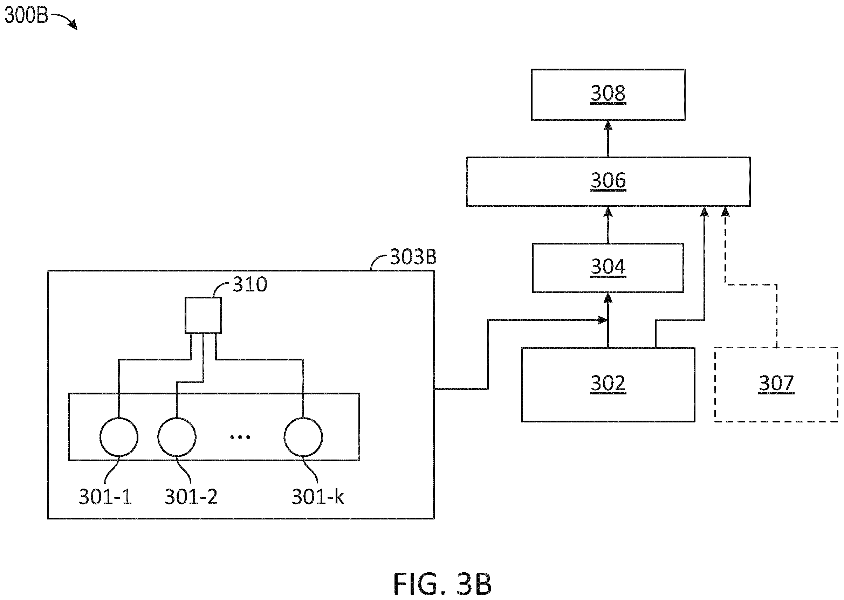

FIGS. 3A-3B illustrate quality ranking models 300A and 300B (hereinafter, collectively referred to as "ranking models 300") for use in recommender system applications, according to some embodiments. Ranking models 300 include independent embeddings 302, aggregation schemes 303A and 303B (hereinafter, collectively referred to as "aggregation schemes 303"), fusion step 304, and a function generation step 306 to create a dyadic function 308. Other features 307 may be incorporated in the analysis. Independent embeddings 302 include attaching a string of numerical values to features and attributes linking users with items and placing these numerical strings as vectors in a multi-dimensional space where a metric can be defined mathematically (*e.g.*, cosine distance, and the like). Dyadic value function 308, *y*(*u* , i), associates a user, u, with an item, i, through a value that may indicate a probability that the user will interact with the item (*e.g.,* download, like, or click on a network item). Ranking models 300 can be divided into categories based on aggregation schemes 303 for dyadic value function 308. Accordingly, some embodiments are based on an item-centered aggregation 303A, and some embodiments are based on a user-centered aggregation 303B.

Item-centered aggregation 303A is anchored on a single user 301, and aggregate over multiple items 310-1, 310-2 through 310-k (hereinafter, collectively referred to as "items 310"). User-centered aggregation 303B is anchored on a single item 310, and aggregate over multiple users 301-1, 301-2 through 301-k (hereinafter, collectively referred to as users 301). Notice that the universe of aggregation data is very different between aggregation 303A and aggregation 303B.

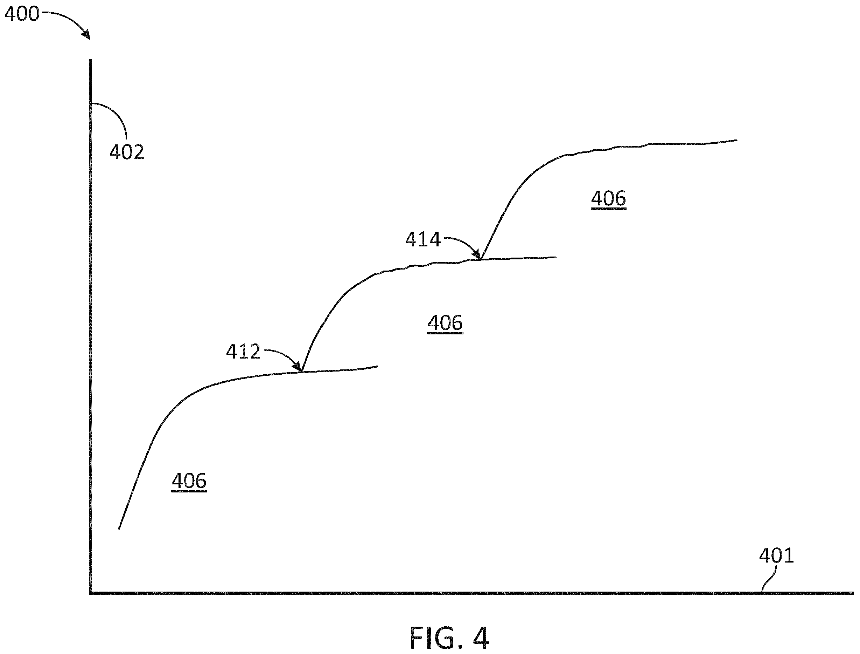

FIG. 4. illustrates a chart 400 with model quality progression (ordinates 402) as a function of scale (abscissae 401), according to some embodiments. Scaling data and computation processes 406 steadily increase the model quality. Processes 406 are not constrained by data retention constraints (users tend to last much longer than content items, in the content recommendation systems). At each step where a model scaling 412 and 414 takes place, there is a substantive increase in model quality 402. Additionally, the amount of logged engagements will remain constant or almost constant over time, relieving computational load (for training and inference) and allowing it to grow over time. In user-centric ranking, the engagement log of an item is restricted to the life cycle of the content. Accordingly, within the shortened life cycle, the system accesses the complete log. When an item exits the system, the interactions with it will no longer be needed. As a result, the system load remains stable.

Processes 406 handle the skewness of engagement distribution over items. In some embodiments, process 406 includes sampling a subset from a set of engaged users.

In other embodiments, processes 406 may aggregate engaged users for a popular item, summarize the engaged users in each population segment into a single representative record *(e.g.,* centroids in the embedded space and weights), and use that summary for training/inference.

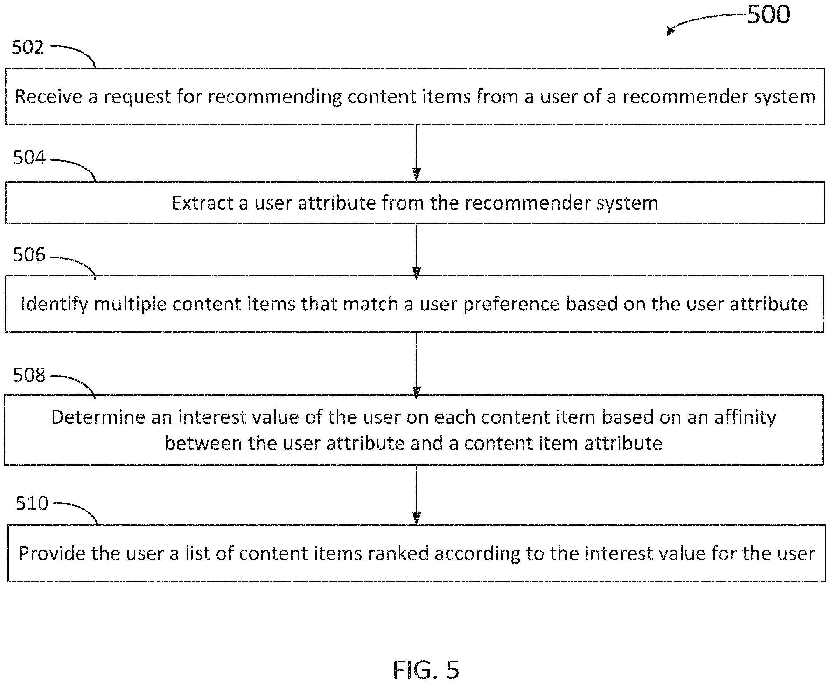

FIG. 5 is a flowchart illustrating steps in a method 500 for recommending a content item in response to a user request in a recommender system, according to some embodiments. In some embodiments, at least one or more steps in method 500 may be performed by a processor executing instructions stored in a memory, the processor and memory being part of a client device, a server, or a database communicatively coupled with one another through communications modules via a network, as disclosed herein (*e.g.*, processors 212, memories 220, client devices 110, servers 130, communications modules 218, and network 150). In some embodiments, the memories may include a content recommendation system application, a media sharing engine, and a recommender engine (*cf.* application 222, media sharing engine 232, and recommender engine 234). In some embodiments, the recommender engine may include a prediction tool, a ranking tool, and a neural network tool, as disclosed herein (*e.g.*, prediction tool 242, ranking tool 244, and neural network tool 246). Methods consistent with the present disclosure may include at least one or more steps in method 500 performed in a different order, simultaneously, quasi-simultaneously, or overlapping in time.

Step 502 includes receiving a user request for recommending a content item in a recommender system.

Step 504 includes extracting a user attribute from the recommender system.

Step 506 includes identifying multiple content items that match the user's interest preference based on the user attribute.

Step 508 includes determining an interest value for the user on each content item based on the user attribute, the item attribute, and an affinity between the two. In some embodiments, step 508 includes aggregating multiple user attributes from multiple users in the recommender system based on an engagement interaction for each user with an item. In some embodiments, step 508 includes identifying relevant attributes of the item based on its content and engagement pattern of multiple users with the item. In some embodiments, step 508 includes quantifying the degree of affinity between the user attribute and the content item attribute.

Step 510 includes providing the user a list of content items ranked according to the interest value for the user. In some embodiments, step 510 includes providing a selected content item from the list of content items to the user, upon receipt of a user selection from the list of content items. In some embodiments, step 510 includes updating the interest value for the user upon receipt of a user selection from the list of media files.

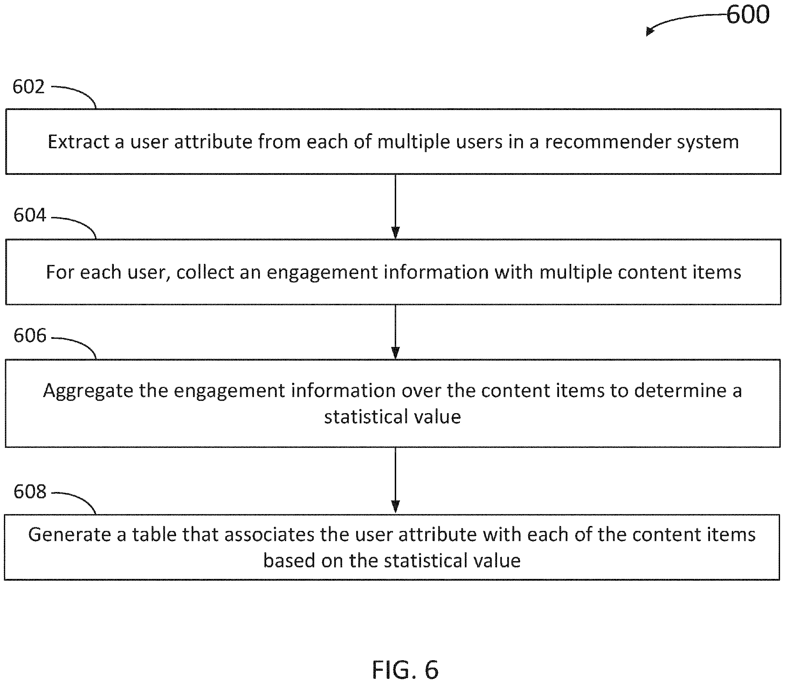

FIG. 6 is a flow chart illustrating steps in a method 600 for training a ranking function for content items in recommender systems based on user attributes, according to some embodiments. In some embodiments, at least one or more steps in method 600 may be performed by a processor executing instructions stored in a memory, the processor and memory being part of a client device, a server, or a database communicatively coupled with one another through communications modules via a network, as disclosed herein (*e.g*., processors 212, memories 220, client devices 110, servers 130, communications modules 218, and network 150). In some embodiments, the memories may include a content item in a recommender system, a media sharing engine, and a recommender engine (*cf.* application 222, media sharing engine 232, and recommender engine 234). In some embodiments, the recommender engine may include a prediction tool, a ranking tool, and a neural network tool, as disclosed herein (*e.g*., prediction tool 242, ranking tool 244, and neural network tool 246). Methods consistent with the present disclosure may include at least one or more steps in method 600 performed in a different order, simultaneously, quasi-simultaneously, or overlapping in time.

Step 602 includes extracting a user attribute from each of multiple users in a recommender system. In some embodiments, step 602 includes converting the user attribute into a numerical value representative of a coordinate of a first point, representative of each of the users in a multidimensional space, wherein each of the content items is associated with a target point in the multidimensional space, and forming a table comprises measuring a distance between the first point and each target point in the multidimensional space. In some embodiments, step 602 includes hashing the user attribute to generate a second user attribute. In some embodiments, step 602 includes embedding each of the users into a multidimensional space by converting the user attribute into one or more numerical values indicative of one or more coordinates in the multidimensional space, and using a metric in the multidimensional space to determine the statistical value.

For each user, step 604 includes collecting an engagement information with multiple content items.

Step 606 includes aggregating the engagement information over the content items to determine a statistical value. In some embodiments, step 606 includes determining a probability value that one of the users will engage with one of the media files based on a media file attribute. In some embodiments, step 606 includes aggregating multiple user attributes for users engaged with a popular content item based on a population segment.

Step 608 includes forming a table that associates the user attribute with each of the content items based on the statistical value. In some embodiments, step 608 includes associating content attributes. In some embodiments, step 608 includes associating the affinity between user and item attributes.

### Hardware Overview

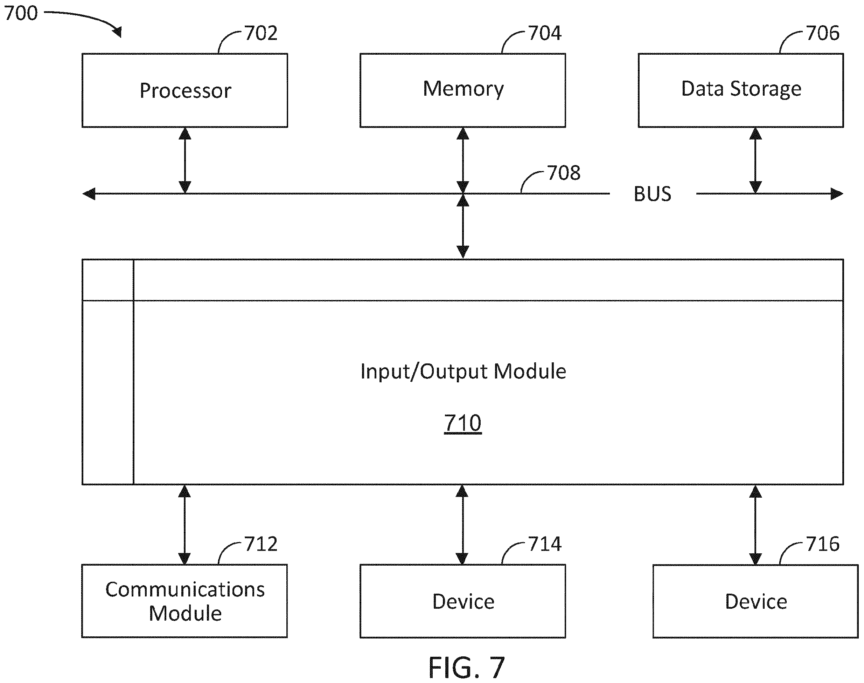

FIG. 7 is a block diagram illustrating an exemplary computer system 700 with which headsets and other client devices 110, and methods 500 and 600 can be implemented, according to some embodiments. In certain aspects, computer system 700 may be implemented using hardware or a combination of software and hardware, either in a dedicated server, or integrated into another entity, or distributed across multiple entities. Computer system 700 may include a desktop computer, a laptop computer, a tablet, a phablet, a smartphone, a feature phone, a server computer, or otherwise. A server computer may be located remotely in a data center or be stored locally.

Computer system 700 includes a bus 708 or other communication mechanism for communicating information, and a processor 702 (*e.g.,* processors 212) coupled with bus 708 for processing information. By way of example, the computer system 700 may be implemented with one or more processors 702. Processor 702 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 700 can include, in addition to hardware, code that creates an execution environment for the computer program in question, *e.g.,* code that constitutes processor firmware, a protocol stack, a database management system, an operating system, or a combination of one or more of them stored in an included memory 704 (*e.g.,* memories 220), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled with bus 708 for storing information and instructions to be executed by processor 702. The processor 702 and the memory 704 can be supplemented by, or incorporated in, special purpose logic circuitry.

The instructions may be stored in the memory 704 and implemented in one or more computer program products, *e.g.,* one or more modules of computer program instructions encoded on a computer-readable medium for execution by, or to control the operation of, the computer system 700, and according to any method well known to those of skill in the art, including, but not limited to, computer languages such as data-oriented languages (*e.g.*, SQL, dBase), system languages (*e.g.,* C, Objective-C, C++, Assembly), architectural languages (*e.g.,* Java, .NET), and application languages (*e.g.,* PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, offside rule languages, procedural languages, reflective languages, rule-based languages, scripting languages, stack-based languages, synchronous languages, syntax handling languages, visual languages, wirth languages, and xml-based languages. Memory 704 may also be used for storing temporary variable or other intermediate information during execution of instructions to be executed by processor 702.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 700 further includes a data storage device 706 such as a magnetic disk or optical disk, coupled with bus 708 for storing information and instructions. Computer system 700 may be coupled via input/output module 710 to various devices. Input/output module 710 can be any input/output module. Exemplary input/output modules 710 include data ports such as USB ports. The input/output module 710 is configured to connect to a communications module 712. Exemplary communications modules 712 include networking interface cards, such as Ethernet cards and modems. In certain aspects, input/output module 710 is configured to connect to a plurality of devices, such as an input device 714 and/or an output device 716. Exemplary input devices 714 include a keyboard and a pointing device, *e.g.,* a mouse or a trackball, by which a consumer can provide input to the computer system 700. Other kinds of input devices 714 can be used to provide for interaction with a consumer as well, such as a tactile input device, visual input device, audio input device, or brain-computer interface device. For example, feedback provided to the consumer can be any form of sensory feedback, *e.g.,* visual feedback, auditory feedback, or tactile feedback; and input from the consumer can be received in any form, including acoustic, speech, tactile, or brain wave input. Exemplary output devices 716 include display devices, such as an LCD (liquid crystal display) monitor, for displaying information to the consumer.

According to one aspect of the present disclosure, headsets and client devices 110 can be implemented, at least partially, using a computer system 700 in response to processor 702 executing one or more sequences of one or more instructions contained in memory 704. Such instructions may be read into memory 704 from another machine-readable medium, such as data storage device 706. Execution of the sequences of instructions contained in main memory 704 causes processor 702 to perform the process steps described herein. One or more processors in a multi-processing arrangement may also be employed to execute the sequences of instructions contained in memory 704. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, *e.g.,* a data server, or that includes a middleware component, *e.g.,* an application server, or that includes a front end component, *e.g.,* a client computer having a graphical consumer interface or a Web browser through which a consumer can interact with an implementation of the subject matter described in this specification, or any combination of one or more such back end, middleware, or front end components. The components of the system can be interconnected by any form or medium of digital data communication, *e.g.,* a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 700 can include clients and servers. A client and server are generally remote from each other and typically interact through a communication network. The relationship of client and server arises by virtue of computer programs running on the respective computers and having a client-server relationship to each other. Computer system 700 can be, for example, and without limitation, a desktop computer, laptop computer, or tablet computer. Computer system 700 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 702 for execution. Such a medium may take many forms, including, but not limited to, non-volatile media, volatile media, and transmission media. Non-volatile media include, for example, optical or magnetic disks, such as data storage device 706. Volatile media include dynamic memory, such as memory 704. Transmission media include coaxial cables, copper wire, and fiber optics, including the wires forming bus 708. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*e.g.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, and other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public, regardless of whether such disclosure is explicitly recited in the above description. No claim element is to be construed under the provisions of 35 U.S.C. §112, sixth paragraph, unless the element is expressly recited using the phrase "means for" or, in the case of a method claim, the element is recited using the phrase "step for."

While this specification contains many specifics, these should not be construed as limitations on the scope of what may be described, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially described as such, one or more features from a described combination can in some cases be excised from the combination, and the described combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, brief description of the drawings, abstract, and drawings are hereby incorporated into the disclosure and are provided as illustrative examples of the disclosure, not as restrictive descriptions. It is submitted with the understanding that they will not be used to limit the scope or meaning of the claims. In addition, in the detailed description, it can be seen that the description provides illustrative examples and the various features are grouped together in various implementations for the purpose of streamlining the disclosure. The method of disclosure is not to be interpreted as reflecting an intention that the described subject matter requires more features than are expressly recited in each claim. Rather, as the claims reflect, inventive subject matter lies in less than all features of a single disclosed configuration or operation. The claims are hereby incorporated into the detailed description, with each claim standing on its own as a separately described subject matter.

The claims are not intended to be limited to the aspects described herein but are to be accorded the full scope consistent with the language claims and to encompass all legal equivalents. Notwithstanding, none of the claims are intended to embrace subject matter that fails to satisfy the requirements of the applicable patent law, nor should they be interpreted in such a way.

## Claims

1. A computer-implemented method, comprising:
receiving a request for recommending content items from a user of a recommender system;
extracting a user attribute from the recommender system;
identifying multiple content items that match a user preference based on the user attribute;
determining an interest value for the user on each content item based on an affinity between the user attribute and a content item attribute; and
providing the user a list of content items ranked according to the interest value for the user.

2. The computer-implemented method of claim 1, wherein determining an interest value for the user on each content item comprises aggregating multiple user attributes from multiple users in the recommender system based on an engagement interaction for each user with an item.

3. The computer-implemented method of claim 1 or claim 2, wherein determining an interest value for the user on each content item comprises identifying a time when the user posted the request.

4. The computer-implemented method of claim 1 or claim 2 or claim 3, wherein determining an interest value for the user on each content item comprises identifying a time when the content item was posted in the recommender system.

5. The computer-implemented method of any preceding claim, further comprising providing a selected content item from the list of content items to the user, upon receipt of a user selection from the list of content items.

6. The computer-implemented method of any preceding claim, further comprising updating the interest value for the user upon receipt of a user selection from the list of content items.

7. A system, comprising:
a memory storing multiple instructions; and
one or more processors configured to execute the instructions to cause the system to perform operations, comprising to:
receive request for recommending content items from a user of a recommender system;
extract a user attribute from the recommender system;
identify multiple content items that match a user preference based on the user attribute;
determine an interest value for the user on each content item based on an affinity between the user attribute and a content item attribute; and
provide the user a list of content items ranked according to the interest value for the user.

8. The system of claim 7, wherein to determine an interest value for the user on each content item the one or more processors execute instructions to aggregate multiple user attributes from multiple users in the recommender system based on an engagement interaction for each user with an item; and/ or
wherein to determine an interest value for the user on each content item the one or more processors execute instructions to identify a time when the user posted the request; and/ or
wherein to determine an interest value for the user on each content item the one or more processors execute instructions to identify a time when the content item was posted in the recommender system.

9. The system of claim 7 or claim 8, wherein the one or more processors further execute instructions to provide a selected content item from the list of content items to the user, upon receipt of a user selection from the list of content items.

10. The system of claim 7 or claim 8 or claim 9, wherein the one or more processors further execute instructions to update the interest value for the user upon receipt of a user selection from the list of content items.

11. A computer-implemented method, comprising:
extracting a user attribute from each of multiple users in a recommender system;
for each user, collecting an engagement information with multiple content items;
aggregating the engagement information over the content items to determine a statistical value; and
generating a table that associates the user attribute with each of the content items based on the statistical value.

12. The computer-implemented method of claim 11, further comprising converting the user attribute into a numerical value representative of a coordinate of a first point, representative of each of the users in a multidimensional space, wherein each of the content items is associated with a target point in the multidimensional space, and forming a table comprises measuring a distance between the first point and each target point in the multidimensional space and/ or
further comprising embedding each of the users into a multidimensional space by converting the user attribute into one or more numerical values indicative of one or more coordinates in the multidimensional space, and using a metric in the multidimensional space to determine the statistical value..

13. The computer-implemented method of claim 11 or 12, wherein extracting a user attribute comprises hashing the user attribute to generate a second user attribute.

14. The computer-implemented method of one of claims 11 to 13, wherein aggregating the engagement information comprises determining a probability value that one of the users will engage with one of the content items based on a content item attribute; and/ or
wherein aggregating the engagement information over the content items comprises aggregating multiple user attributes for users engaged with a popular content item based on a population segment.

15. The computer-implemented method of one of claims 11 to 14, wherein forming the table that associates the user attribute with each of the content items comprises associating a time for a posting of each of the content items in the recommender system with the engagement information; and/ or
wherein forming the table that associates the user attribute with each of the content items comprises associating a time for a user search query in the recommender system with the engagement information.
